# EUROPEAN PATENT APPLICATION

(11) **EP 2 838 023 A2**
(43) Date of publication of application: **18.02.2015**
(21) Application number: 14178416.5
(22) Date of filing: 24.07.2014
(51) Int. Cl.: G06F 11/34, G06F 11/07, G06F 11/30

(54) **Centralised information reporting in a large scale information processing system**

(30) Priority: 16.08.2013 JP 2013169233
(71) Applicant: FUJITSU LIMITED, Kawasaki-shi, Kanagawa 211-8588 (JP)
(72) Inventor: Itou, Tetsuya, Kawasaki-shi, Kanagawa 211-8588 (JP)
(74) Representative: Lewin, David Nicholas

(57) **Abstract**

An information processing system (1) includes: a plurality of information processing apparatuses (4); and a controller (2) that controls the information processing apparatuses (4), the controller (2) including: a selector (181) that selects one of the information processing apparatuses (4), as a collecting unit, each of the information processing apparatus (4) including: a retriever (282) that retrieves historical information (32) items from the other information processing apparatuses (4), the retriever (282) being operable after the information processing apparatus (4) is assigned as the collecting unit; and a collector (285) that collects the historical information (32) items to generate collected information (33).

## Description

### FIELD

The present invention relates to an information processing system, a method of controlling an information processing system, and a computer-readable recording medium storing a control program for a controller.

### BACKGROUND

The development of information processing systems has been promoted, for example, for high performance computing (HPC) systems, such as super computers.

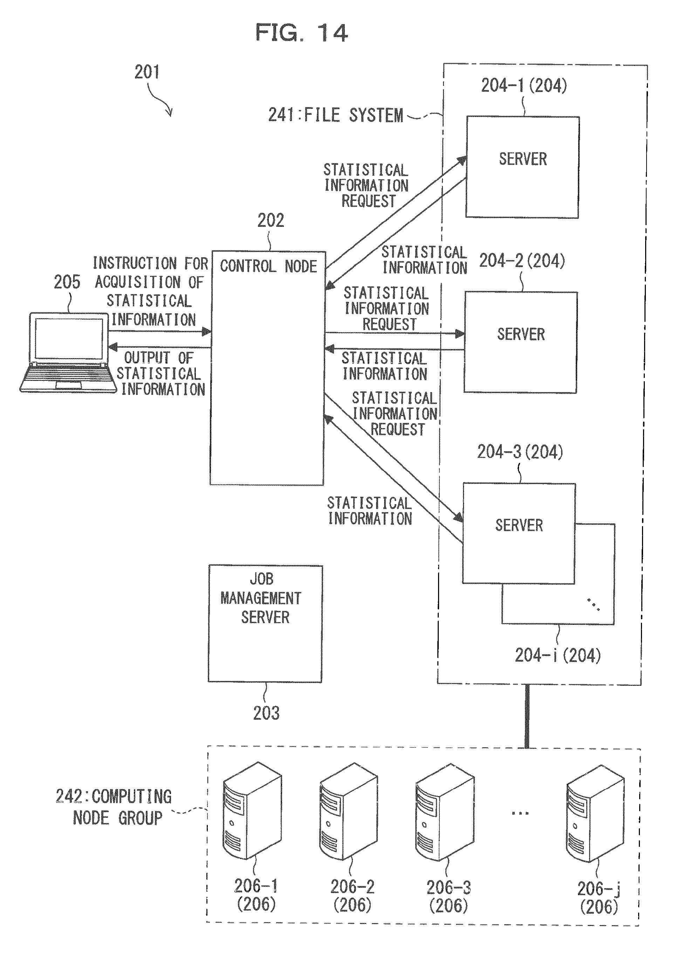

FIG. 14 is a schematic view illustrating the system configuration of an information processing system 201.

The information processing system 201 includes a control node 202, a job management server 203, servers 204-1 to 204-i (where i is an integer of two or more), a management terminal 205, and computing nodes 206-1 to 206-j (where j is an integer of two or more). For example, i is 3000 and j is 80000.

The control node 202, the job management server 203, the servers 204-1 to 204-i, the management terminal 205, and the computing nodes 206-1 to 206-j are mutually connectable through a network, such as InfiniBand ^{®} and/or a local area network (LAN).

The control node 202 is a control server that configures and controls the entire information processing system 201. The control node 202 is in charge of comprehensive control on the information processing system 201 to control a file system 241 described below, system configuration, jobs, and users. The control node 202 receives different instructions from a system administrator and monitors the status of the information processing system 201 via the management terminal 205.

The job management server 203 is an information processing apparatus that controls all jobs executed in the information processing system 201.

A job selected by a user of one of the computing nodes 206-1 to 206-j in the information processing system 201 is registered in the job management server 203 and then executed.

The servers 204-1 to 204-i, which have identical configurations, store large amounts of data and make up the distributed file system 241 of the information processing system 201. The distributed file system 241 stores data to be used for various processes carried out in the information processing system 201, data acquired through such processes, statistical information on the information processing system 201, and historical data, such as system logs.

The computing nodes 206-1 to 206-j , which are clients of the distributed file system 241, write and read data to and from the servers 204-1 to 204-i.

The management terminal 205 is an information processing apparatus used by a system administrator for the management and maintenance of the information processing system 201.

The computing nodes 206-1 to 206-j , which are information processing apparatuses functioning as servers, carry out various calculations. The computing nodes 206-1 to 206-j, which have identical configurations, collectively make up a computing node group 242.

The computing nodes 206-1 to 206-j are connected to the servers 204-1 to 204-i via a network. The computing nodes 206-1 to 206-j access data in the servers 204-1 to 204-i as clients of the distributed file system 241, carry out various processes with the retrieved data, and write the results in the relevant servers 204-1 to 204-i.

The large-scale distributed file system 241 collects statistical information on jobs executed in the information processing system 201. The statistical information is used by a system administrator for troubleshooting and updating the operating status of the system.

Problems occur in the information processing system 201 during operation and the user status of the information processing system 201 varies in real time. When a user reports a problem or when the system administrator detects a malfunction of the system, the system administrator should promptly analyze the statistical information on the distributed file system 241 to determine the cause of the problem or malfunction. In order to determine the cause, the statistical information acquired in the information processing system 201 should be updated in real time.
Patent Document 1: Japanese Laid-open Patent Publicat ion No. 11-175373
Patent Document 2: Japanese Laid-open Patent Publication No. 2003-140958

A large-scale system, such as an HPC system, involves several tens of thousands of clients (computing nodes 206), several thousand servers 204, and numerous nodes (information processing apparatuses). The process is time-consuming for the control node 202 to retrieve statistical information items from the servers 204, tally the collected statistical information items, and provide the updated statistical information to the system administrator.

During job execution using a large-scale distributed file system 241, which is often used in the HPC system, real-time troubleshooting is difficult because of the time-consuming acquisition of statistical information.

For example, the retrieval of statistical information items from 10000 clients (computing nodes) 206 requires 100 seconds if each of the servers 204 spends 0.01 seconds to retrieve a statistical information item from the corresponding client.

That is, the process is already delayed by 100 seconds upon acquisition of the statistical information, precluding the acquisition of statistical information in real time and thus hindering troubleshooting.

Since the retrieval of the statistical information items from the servers 204 by the control node 202 is time-consuming, the update of the statistical information requires several minutes to several tens of minutes.

In a large-scale system, the retrieval and update of statistical information impose a high processing load on the control node 202 and consume many resources, such as the memory of the control node 202, the CPU, the disk area, and the communication band between the control node 202 and the servers 204.

An increased number of defective servers 204 are found in a scaled-up information processing system 201. The servers 204 non-responsive to such defects must be recovered. This could delay the acquisition of the statistical information even more.

### SUMMARY

An object of an aspect of the present invention, which has been conceived in light of the issues described above, is to reduce the time required for the acquisition of statistical information in an information processing system.

Another object of the present invention is to achieve advantages through the configurations according to the embodiments of the present invention described below, the advantages not achievable through conventional art.

An information processing system is provided, the system including a plurality of information processing apparatuses; and a controller that controls the information processing apparatuses, the controller including a selector that selects one of the information processing apparatuses, as a collecting unit, each of the information processing apparatus including a retriever that retrieves historical information items from the other information processing apparatuses, the retriever being operable after the information processing apparatus is assigned as the collecting unit; and a collector that collects the historical information items to generate collected information.

A method of controlling an information processing system is provided, the information processing system including a plurality of information processing apparatuses and a controller that controls the information processing apparatuses, the method including selecting one of the information processing apparatuses as a collecting unit at the controller; collecting historical information items from the information processing apparatuses at the controller; and generating collected information at the collecting unit in response to an instruction from the controller, the collected information containing a collection of the historical information items from the information processing apparatus.

A control program for a controller controlling a plurality of information processing apparatuses, the program permitting causing the controller to select one of the information processing apparatuses as a collecting unit, collect historical information items from the information processing apparatuses, and instruct the collecting unit to generate collected information containing the historical information items from the information processing apparatuses.

The techniques described above can quickly detect the completion of the migration of a virtual machine.

### BRIEF DESCRIPTION OF DRAWINGS

FIG. 1 is a schematic view of the system configuration of an information processing system according to an embodiment;
FIG. 2 is a schematic view of the system configuration of a control node in an information processing system according to an embodiment.
FIG. 3 is a schematic view of the system configuration of a server in an information processing system according to an embodiment;
FIG. 4 illustrates an exemplary node list used in an information processing system according to an embodiment.
FIG. 5 illustrates an exemplary server list used in an information processing system according to an embodiment;
FIG. 6 illustrates an exemplary piecemeal statistical information item generated by a server according to an embodiment;
FIG. 7 illustrates an exemplary job information item used in an information processing system according to an embodiment;
FIG. 8 illustrates an exemplary job statistical information item used in an information processing system according to an embodiment;
FIG. 9 is a schematic view of the operation of a collector-server selector of a statistical-information acquirer in a control node according to an embodiment.
FIG. 10 is a schematic view of the operation of an information processing system according to an embodiment during collection of statistical information;
FIG. 11 is a schematic view of the operation in a non-responsive mode of a candidate collector server selected in the information processing system according to an embodiment;
FIG. 12 is a schematic view of the operation of the entire information processing system according to an embodiment;
FIG. 13 is a flow chart illustrating the operation of the entire information processing system according to an embodiment; and
FIG. 14 is a schematic view of the system configuration of a large-scale information processing system.

### DESCRIPTION OF EMBODIMENTS

The configuration of an information processing system, a method of controlling an information processing system, and a computer-readable recording medium storing a control program for a controller according to embodiments will now be described with reference to the accompanying drawings.

### (A) System Configuration

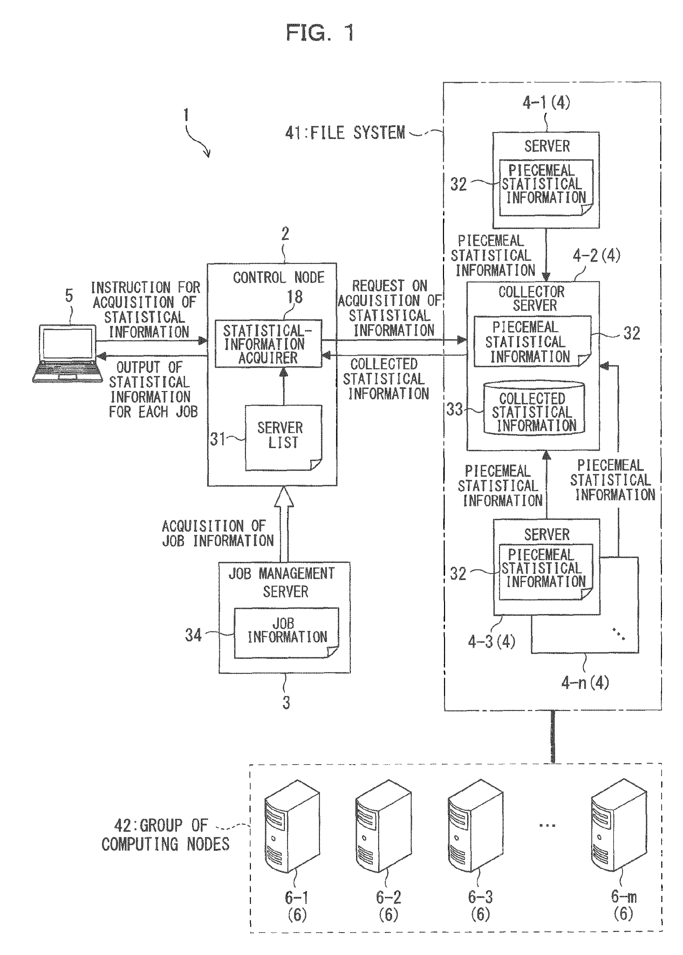

An information processing system 1 will now be described with reference to FIGS. 1 to 8.

FIG. 1 is a schematic view of the system configuration of an information processing system 1 according to an embodiment.

The information processing system 1 is a large-scale information processing system, such as a super computer, and includes at least several thousand to several tens of thousands of information processing apparatuses. For example, the information processing system 1 is used for performing complicated tasks that require enormous amounts of calculations, such as weather prediction, *tsunami* prediction, and myocardial simulation.

The information processing system 1 includes a control node (controller) 2, a job management server (manager) 3, servers (information processing apparatuses) 4-1 to 4-n (where n is an integer of two or more), a management terminal 5, and computing nodes (clients) 6-1 to 6-m (where m is an integer of two or more). For example, n is 3000 and m is 80000.

The control node 2, the job management server 3, the servers 4-1 to 4-n, the management terminal 5, and the computing nodes 6-1 to 6-m are mutually connectable through a network, such as InfiniBand and/or a LAN.

The control node 2 is a control server that configures and controls the entire information processing system 1. The control node 2 is in charge of comprehensive control on the information processing system 1 to control the file system 41, system configuration, jobs, and users. The control node 2 receives different instructions from a system administrator and monitors the status of the information processing system 1 via the management terminal 5.

The information processing system 1 includes one operating control node 2. Every operation via the control node 2 can only be instructed by an administrator or a user equivalent to the administrator. A general user cannot instruct an operation via the control node 2.

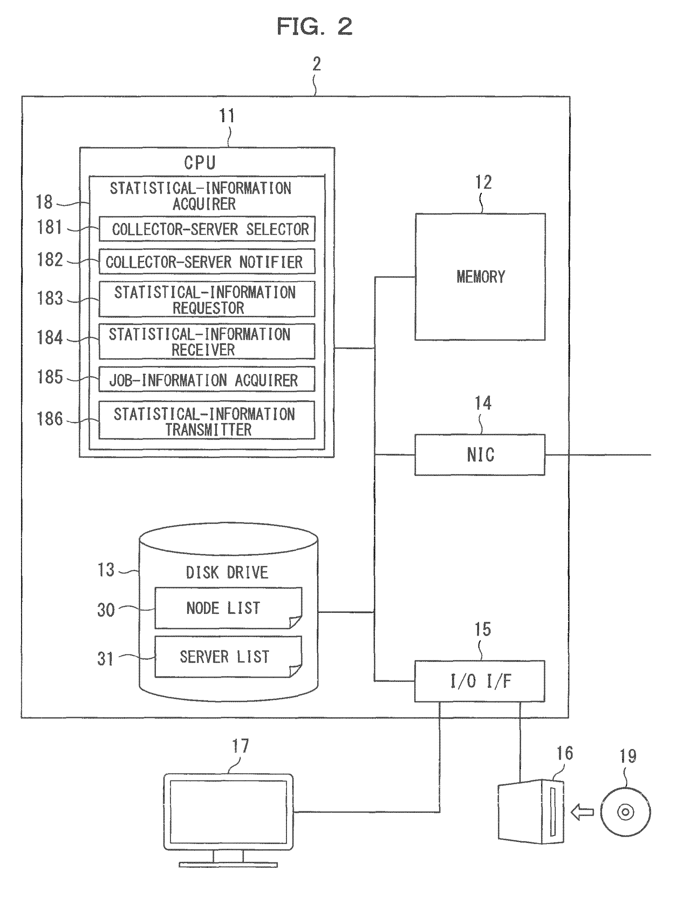

As described below, the control node 2 selects one of servers 4-1 to 4-n as a candidate for a collector server (collector) that collects statistical information (hereinafter may also be referred as "candidate collector server") at every rotation interval (t1 (first interval)). Details of the configuration and functions of the control node 2 will be described below with reference to FIG. 2.

The control node 2 stores a server list 31 containing Internet protocol (IP) addresses of the servers 4 in the file system 41 and selects a candidate collector server from the server list 31.

The job management server 3 is an information processing apparatus that controls all jobs executed in the information processing system 1 and stores information on the jobs as job information 34. In response to an inquiry on job information from the control node 2, the job management server 3 sends the job information 34 to the control node 2. The job management server 3 may be a typical server computer.

Jobs assigned by users of the computing nodes 6-1 to 6-m in the information processing system 1 are registered in the job management server 3 and then executed.

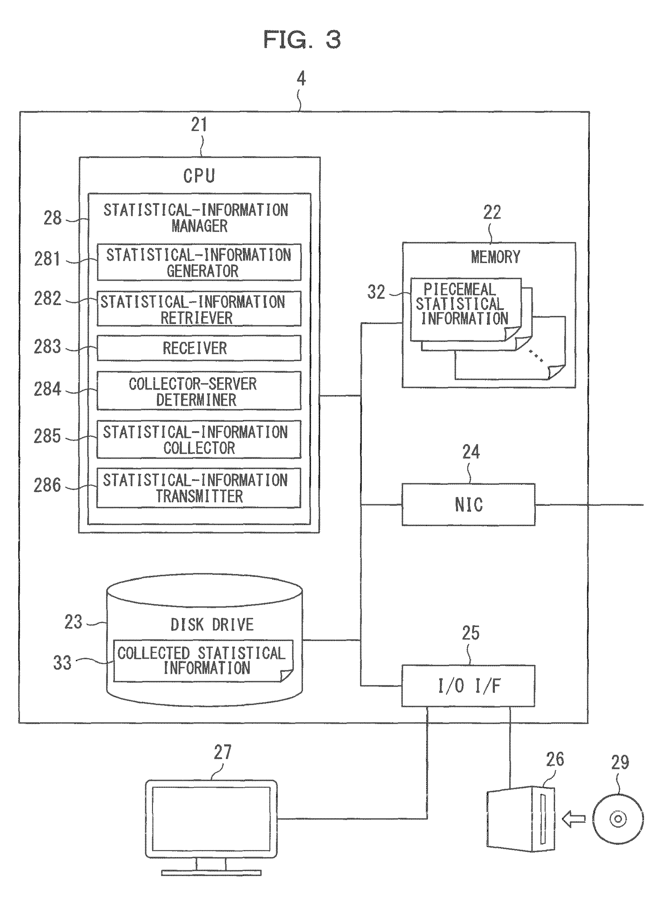

The servers 4-1 to 4-n have identical configurations, store large amounts of data, and make up a distributed file system 41 of the information processing system 1. Details of the configuration and functions of the servers 4-1 to 4-n will be described with reference to FIG. 3.

The distributed file system 41 stores data to be used for various processes carried out by the information processing system 1, data acquired through such processes, statistical information on the information processing system 1, and historical data, such as system logs.

The computing nodes 6-1 to 6-m, which are clients of the distributed file system 41, write and read data to and from the corresponding servers 4-1 to 4-n.

The servers 4-1 to 4-n store piecemeal statistical information items 32 at every retrieval interval (t2 (second interval)). One of the servers 4 is selected (designated) by the control node 2 as a collector server 4 and receives the stored piecemeal statistical information items 32. Statistical information contains various activities involved with the file system 41. Activities involved with the file system 41 include every operation associated with files and directories, such as writing a file, reading a file, creating or deleting a file, and synchronizing and updating the file data, and modifying the attribute of file data.

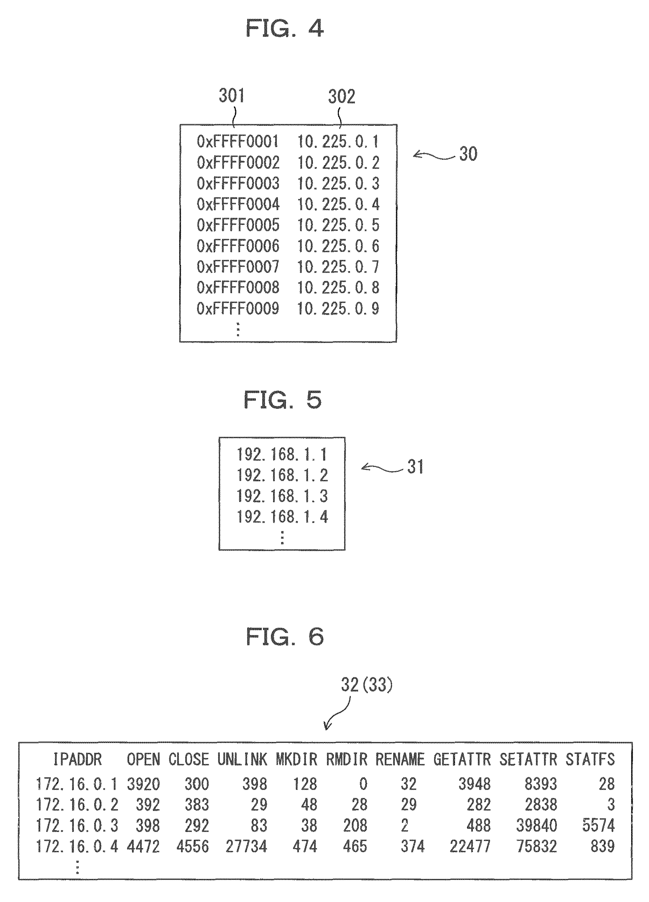

The statistical information is accumulated after the start-up of the file system 41. The piecemeal statistical information 32 is generated by retrieving (extracting) statistical information items corresponding to predetermined retrieval intervals from the statistical information. Details on the piecemeal statistical information 32 will be described below with reference to FIG. 6.

The management terminal 5 is an information processing apparatus used by a system administrator for management and maintenance of the information processing system 1. If a problem occurs in the file system 41, the system administrator operates the management terminal 5 to analyze the collected statistical information 33 of the file system 41 to determine the load applied to the file system 41 and the trend of the file access. The collected statistical information 33 will be described below.

The management terminal 5, for example, is a typical personal computer (PC).

The computing nodes 6-1 to 6-m, which are information processing apparatuses functioning as servers, carry out various calculations. The computing nodes 6-1 to 6-m, which have identical configurations, collectively make up a computing node group 42.

The computing nodes 6-1 to 6-m are connected to the servers 4-1 to 4-n via a network. The computing nodes 6-1 to 6-m access data in the servers 4-1 to 4-n as clients of the distributed file system 41, carry out various processes with the retrieved data, and write the results in the relevant servers 4-1 to 4-n. The computing nodes 6-1 to 6-m may also be referred to as clients 6-1 to 6-m, respectively.

Each of the computing nodes 6-1 to 6-m may be any common server.

Reference signs 4-1 to 4-n each indicate a specific server, while reference sign 4 indicates any one or more servers among the servers 4-1 to 4-n.

Reference signs 6-1 to 6-m each indicate a specific computing node (client), while reference sign 6 indicates any one or more computing node among the computing nodes 6-1 to 6-m.

As the scale of the file system 41 in the information processing system 1 increases, the number of servers 4 and the number of clients (computing nodes 6) also increase in the file system 41.

FIG. 2 is a schematic view of the system configuration of a control node 2 in the information processing system 1 according to an embodiment.

The control node 2 includes a central processing unit (CPU) 11, a memory 12, a disk drive 13, a network interface card (NIC) 14, and an input/output interface (I/O I/F) 15.

The CPU 11, which carries out various control and calculation processes, executes an operating system (OS) and different programs stored in the memory 12 and the disk drive 13 to provide various functions. The CPU 11 may be of any known type.

The memory 12 temporarily stores programs and data to be executed by the CPU 11 and data items collected through the operation of the CPU 11. The memory 12 may be of any known type, such as a random access memory (RAM).

The disk drive 13, which is a storage device having a storage area for storing data, stores, for example, a node list 30, a server list 31, programs, and data. The disk drive 13 may be a known hard disk drive (HDD) or solid state drive (SSD) .

The node list 30 and the server list 31 will be described below with reference to FIGS. 4 and 5, respectively.

The NIC 14 is a network adaptor that connects the control node 2 to a network via another network, such as a LAN, and, for example, is a LAN card.

The I/O I/F 15 connects the control node 2 to an external device and, for example, is a universal serial bus (USB) adaptor.

The control node 2 connects to a medium reader 16 and/or a display 17 via the I/O I/F 15.

The medium reader 16 is a drive that reads from and writes in a recording medium 19, such as a CD (e.g., CD-ROM, CD-R, or CD-RW), a DVD (e.g., DVD-ROM, DVD-RAM, DVD-R, DVD+R, DVD-RW, or DVD+RW), or a Blu-ray disk. The medium reader 16 illustrated in FIG. 2 is an external drive of the control node 2. Alternatively, the medium reader 16 may be installed in the control node 2.

The display 17, which can display different information items, is, for example, a liquid crystal display or a cathode ray tube (CRT). The display 17 illustrated in FIG. 2 is an external display of the control node 2. Alternatively, the display 17 may be installed in the control node 2.

The CPU 11 functions as a statistical-information acquirer 18 through the execution of a program (not shown), for example, stored in the disk drive 13.

The statistical-information acquirer 18 selects one of the servers 4 as a collector server 4, receives an instruction for the acquisition of statistical information from the system administrator via the management terminal 5, receives the collected statistical information 33 for each computing node 6 from the collector server 4, and transmits the items of received collected statistical information 33 to the management terminal 5.

The statistical-information acquirer 18 includes a collector-server selector (selector) 181, a collector-server notifier (notifier) 182, a statistical-information requestor 183, a statistical-information receiver 184, a job-information acquirer 185, and a statistical-information transmitter (transmitter) 186.

The collector-server selector 181 selects one of the servers 4 as a candidate collector server every predetermined rotation interval (t1) with reference to the server list 31. The collector-server selector 181 selects the servers 4 as a candidate collector server in accordance with the order listed in the server list 31.

The interval of the rotation is determined by an administrator depending on the job status in the information processing system 1. For example, the system administrator may set the interval of rotation at 10 minutes.

Specifically, the collector-server selector 181 assigns a "candidate" collector server 4 from the multiple servers 4 with reference to the server list 31. If the candidate server 4 is responsive (i.e., not defective), this server 4 functions as the collector server. For simplification, the candidate collector server 4 assigned by the collector-server selector 181 may also be referred to as "collector server 4."

If the server 4 assigned as a candidate collector server is non-responsive, the collector-server selector 181 assigns the next server 4 on the server list 31 as a candidate collector server. After assigning the last server 4 on the server list 31, the collector-server selector 181 returns to the top of the server list 31 and assigns the first server 4 on the server list 31.

The collector-server notifier 182 notifies the candidate collector server 4 assigned by the collector-server selector 181 about the assignment as a candidate collector server. If the assigned server 4 is not responsive to this notification, the collector-server selector 181 assigns the next server 4 on the server list 31 as a candidate collector server. Such assignment is repeated until a response from a candidate collector server 4.

Upon reception of a response from the server 4 that is the candidate collector server, the collector-server notifier 182 sends information specifying the assigned collector server 4 (an IP address in this embodiment) to all of the servers 4.

The statistical-information requestor 183 receives an instruction for the acquisition of statistical information from the system administrator via the management terminal 5 and sends a request of the statistical information to the collector server 4.

The statistical-information receiver 184 receives items of collected statistical information 33 for each client 6 from the statistical-information transmitter 286 of the collector server 4.

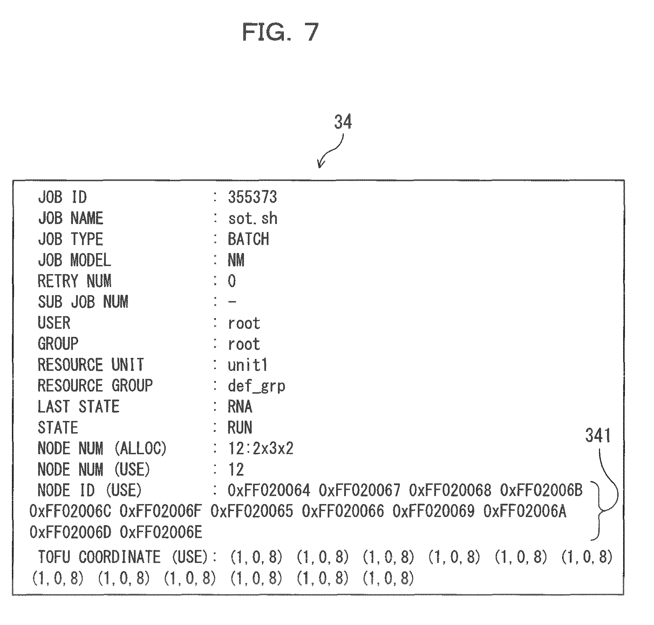

The job-information acquirer 185 receives the job information 34 associated with jobs active in the information processing system 1 from the job management server 3. The job information 34 will be described below with reference to FIG. 7.

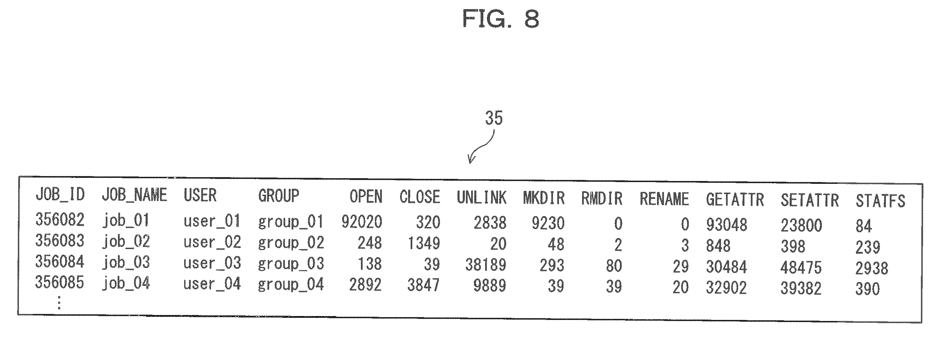

The statistical-information transmitter 186 refers to the node list 30 and the job information 34 acquired by the job-information acquirer 185, tallies the items of job statistical information 35 (refer to FIG. 8) collected for every job from the collected statistical information 33 acquired by the statistical-information receiver 184, and sends the tallied information to the management terminal 5.

The system administrator browses the job statistical information 35, which is the output in response to the statistical-information acquisition instruction, via the management terminal 5 to confirm the operating status of the information processing system 1.

The programs (control programs of the controller) that provide the functions of the statistical-information acquirer 18, the collector-server selector 181, the collector-server notifier 182, the statistical-information requestor 183, the statistical-information receiver 184, the job-information acquirer 185, and the statistical-information transmitter 186 are stored on a computer-readable recording medium 19, such as a flexible disk, a CD (e. g. , CD-ROM, CD-R, or CD-RW), a DVD (e. g. , DVD-ROM, DVD-RAM, DVD-R, DVD+R, DVD-RW, DVD+RW, or HD DVD), a Blu-ray disk, a magnetic disk, an optical disk, or a magneto-optical disk. The computer (controller) reads a relevant program on the recording medium 19 via the medium reader 16, and transfers the read program to an internal or external recording device to store the transferred program. The program may be stored on a recording device (recording medium 19), such as a magnetic disk, an optical disk, or a magneto-optical disk, and sent to the computer (controller) from the recording device via a communication path.

The functions of the statistical-information acquirer 18, the collector-server selector 181, the collector-server notifier 182, the statistical-information requestor 183, the statistical-information receiver 184, the job-information acquirer 185, and the statistical-information transmitter 186 are provided by a microprocessor (the CPU 11 of a control node 2 in this embodiment) of the computer (controller) executing the corresponding programs stored in the disk drive 13. The corresponding programs stored on the recording medium may be read and executed by the computer (controller).

FIG. 3 is a schematic view of the system configuration of a server 4 in the information processing system 2 according to an embodiment.

The server 4 has a CPU 21, a memory 22, a disk drive 23, an NIC 24, and an I/O I/F 25.

The CPU 21, which carries out various control and calculation processes, executes an OS and different programs stored in the memory 22 and the disk drive 23 to provide various functions. The CPU 21 may be of any known type.

The memory 22 temporarily stores piecemeal statistical information 32, which is described below, programs and data to be executed by the CPU 21 and data collected through the operation of the CPU 21. The memory 22 may be of any known type, such as a random access memory (RAM).

The disk drive 23, which is a storage device having a storage area for storing data, stores, for example, collected statistical information 33, programs, and data. The disk drive 23 may be a known HDD or SSD.

The NIC 24 is a network adaptor that connects the server 4 to a network via another network, such as a LAN and, for example, is a LAN card.

The I/O I/F 25 connects the server 4 to an external device and, for example, is a USB adaptor.

The server 4 connects to a medium reader 26 and/or a display 27 via the I/O I/F 25.

The medium reader 26 is a drive that reads and writes information in and from, respectively, a recording medium 29, such as a CD (e. g. , CD-ROM, CD-R, or CD-RW), a DVD (e. g. , DVD-ROM, DVD-RAM, DVD-R, DVD+R, DVD-RW, or DVD+RW), or a Blu-ray disk. The medium reader 26 illustrated in FIG. 3 is an external drive of the server 4. Alternatively, the medium reader 26 may be installed in the server 4.

The display 27, which can display different information items, is, for example, a liquid crystal display or a CRT. The display 27 illustrated in FIG. 3 is an external display of the server 4. Alternatively, the display 27 may be installed in the server 4.

The CPU 21 functions as a statistical-information manager 28 through the execution of a program (not shown) stored in the disk drive 23.

The statistical-information manager 28 generates piecemeal statistical information 32 for the server 4 and, if the server 4 is a collector server 4, receives items of piecemeal statistical information 32 from the other servers 4 to generate collected statistical information 33. The statistical-information manager 28 includes a statistical-information generator 281, a statistical-information retriever (retriever) 282, a receiver 283, a collector-server determiner 284, a statistical-information collector (collector) 285, and a statistical-information transmitter 286.

The statistical-information generator 281 generates piecemeal statistical information 32 containing records of activities involved with every client (computing node) 6 accessing the server 4 at predetermined retrieval intervals (t2). The piecemeal statistical information 32 will be described below with reference to FIG. 6.

Each server 4 stores statistical information items accumulated from the start of the file system 41. The statistical-information generator 281 retrieves (extracts) the piecemeal statistical information 32 corresponding to a predetermined time (retrieval interval) from the accumulated statistical information.

If the server 4 is the collector server 4, the statistical-information retriever 282 requests the piecemeal statistical information to other servers 4 at every retrieval interval (t2) and retrieves items of the piecemeal statistical information 32 from the other servers 4.

At the retrieval intervals, the statistical-information retriever 282 issues requests of piecemeal statistical information to the other servers 4. The retrieval interval is determined by an administrator depending on the job status. For example, the administrator determines the retrieval interval depending on the execution time of a job by referring to the job statistical information 35 from the control node 2 during execution of the job.

If many of the jobs can be completed within less than 30 minutes, the statistical information should be collected in intervals of less than 30 minutes. Thus, the retrieval interval is set to 30 minutes or less.

The receiver 283 receives the IP address of the collector server 4 from the control node 2. Otherwise, the receiver 283 receives a request of statistical information from the control node 2.

The collector-server determiner 284 determines whether the server 4 is a collector server on the basis of the IP address of the collector server 4 received by the receiver 283.

If the server 4 is a collector server, the statistical-information collector 285 tallies the piecemeal statistical information 32 generated by the statistical-information generator 281 of the server 4 and the items of piecemeal statistical information 32 from the other servers 4 to generate collected statistical information 33 (refer to FIG. 6) of the entire file system 41.

Upon the reception of a request of statistical information from the control node 2 by the receiver 283, the statistical-information transmitter 286 sends the collected statistical information 33 generated by the statistical-information collector 285 to the control node 2.

The programs (control programs of the information processing apparatus) that provide the functions of the statistical-information manager 28, the statistical-information generator 281, the statistical-information retriever 282, the receiver 283, the collector-server determiner 284, the statistical-information collector 285, and the statistical-information transmitter 286 are stored on a computer-readable recording medium 29, such as a flexible disk, a CD (e.g., CD-ROM, CD-R, or CD-RW), a DVD (e.g., DVD-ROM, DVD-RAM, DVD-R, DVD+R, DVD-RW, DVD+RW, or HD DVD), a Blu-ray disk, a magnetic disk, an optical disk, or a magneto-optical disk. The computer (information processing apparatus) reads a relevant program from the recording medium 29 via the medium reader 26 and transfers the read program to an internal or external recording device to store the transferred program. The program may be stored on a recording device (recording medium 29), such as a magnetic disk, an optical disk, or a magneto-optical disk, and sent to the computer (information processing apparatus) from the recording device via a communication path.

The functions of the statistical-information manager 28, the statistical-information generator 281, the statistical-information retriever 282, the receiver 283, the collector-server determiner 284, the statistical-information collector 285, and the statistical-information transmitter 286 are provided by a microprocessor (the CPU 21 of a server 4 in this embodiment) of the computer (information processing apparatus) executing the corresponding programs stored in the disk drive 23. The corresponding programs stored on the recording medium may be read and executed by the computer (information processing apparatus).

FIG. 4 illustrates a node list 30 used in the information processing system 1 according to an embodiment.

The node list 30 is a table listing all nodes in the information processing system 1, such as the control node 2, the job management server 3, the servers 4, the management terminal 5, and the computing nodes 6.

The node list 30 links node IDs 301 and the respective IP addresses 302.

A node ID 301 uniquely identifies a node. A node ID 301 may be a node name.

An IP address 302 is the IP address of a node.

FIG. 5 illustrates a server list 31 used in the information processing system 1 according to an embodiment.

The server list 31 is a table listing the IP addresses of the servers 4 in the information processing system 1.

FIG. 5 illustrates only the IP addresses of the servers 4. In addition to the IP addresses of the servers 4, the IDs (names, for example) of the servers 4 may also be listed.

FIG. 6 illustrates items of statistical information 32 generated by a server 4 according to an embodiment.

The piecemeal statistical information 32 contains statistical information associated with the different activities performed on the file system 41 by the clients 6 connected to the servers 4 that generated the items of piecemeal statistical information 32. The items of statistical information are tallied into a statistical value for each client 6.

In the example illustrated in FIG. 6, the item of piecemeal statistical information 32 contains the following entries: IPADDR, OPEN, CLOSE, UNLINK, MKDIR, RMDIR, RENAME, GETATTR, SETATTR, and STATFS.

An item of piecemeal statistical information 32 contains several tens of entries. FIG. 6 illustrates only representative entries, for simplification.

In this embodiment, IPADDR indicates an IP address of a client (computing node) 6 that has executed a job.

OPEN indicates the number of file-opening operations by a job.

CLOSE indicates the number of file-closing operation by a job.

UNLINK indicates the number of file-deleting operations by a job.

MKDIR indicates the number of directory-creating operations by a job.

RMDIR indicates the number of directory-deleting operations by a job.

RENAME indicates the number of file- or directory-renaming operation by a job.

GETATTR indicates the number of file or directory attribution retrieving operations by a job.

SETATTR indicates the number of file or directory attribution establishing operations by a job.

STATFS indicates the number of confirming operations of the status of the file system 41 by a job.

In general, among the entries listed above, the statistical information contains OPEN, CLOSE, UNLINK, MKDIR, RMDIR, RENAME, GETATTR, SETATTR, and STATFS.

The collector server 4 calculates the sum of the items of piecemeal statistical information 32 tallied by the servers 4 to generate the collected statistical information 33. The collected statistical information 33 contains data items similar to those in the piecemeal statistical information 32 illustrated in FIG. 6. Thus, the depiction and description of the collected statistical information 33 will be omitted.

FIG. 7 illustrates an item of job information 34 used in the information processing system 1 according to an embodiment.

The job information 34 contains information associated with jobs executed in the information processing system 1 and is acquired by the job-information acquirer 185 from the job management server 3.

In the example illustrated in FIG. 7, an item of job information 34 contains the following entries : JOB ID, JOB NAME, JOB TYPE, JOB MODEL, RETRY NUM, SUB JOB NUM, USER, GROUP, RESOURCE UNIT, RESOURCE GROUP, LAST STATE, STATE RUN, NODE NUM (ALLOC), NODE NUM (USE), NODE ID (USE) 341, and TOFU COORDINATE (USE).

In this embodiment, JOB ID contains a job ID for uniquely identifying a job to be executed in the information processing system 1. As described above, the job ID is assigned to each job by the job management server 3.

JOB NAME indicates the name of a job assigned by a user who instructed the job.

JOB TYPE indicates the type of the job: e.g., "BATCH" indicating a batch job.

JOB MODEL indicates the model of the job: e.g., "BU" indicating a bulk job (multiple jobs executed by a single computing node).

RETRY NUMBER indicates the number of job retry operations.

SUB JOB NUM indicates the number of sub-job executions by the job.

USER indicates the name of the user instructing the job.

GROUP indicates the group to which the user who instructed the job belongs to.

RESOURCE UNIT indicates the name of a resource unit, which is an execution unit of a job.

RESOURCE GROUP indicates the name of the resource unit.

LAST STATE indicates the previous status of the job (e.g., stand-by or active). For example, "RNA" indicates that the job has been in a stand-by mode.

STATE indicates the current status of the job (e.g., stand-by or active). For example, "RUN" indicates that the job is active.

NODE NUM (ALLOC) indicates the number of computing nodes 6 assigned to the job.

NODE NUM (USE) indicates the number of computing nodes 6 used for the job.

NODE ID (USE) 341 indicates the IDs of the computing nodes 6 used for the job. The node IDs of the computing nodes 6 listed in the drawing correspond to the IDs shown in FIG. 4. A node ID is used for the generation of the job statistical information 35 for each client 6 by the statistical-information transmitter 186 of the control node 2.

TOFU COORDINATE (USE) indicates the coordinates of the computing nodes 6 to be used for the job. The coordinates are mere examples and, depending on the implementation of the information processing system 1, these coordinates may not be used or another coordinate system may be used.

The format of the job information 34 illustrated in FIG. 7 is a mere illustrative example. The format of the job information 34 from the job management server 3 may be appropriately modified depending on the configurations and/or implementations of the information processing system 1 and the job management server 3.

FIG. 8 illustrates an item of job statistical information 35 used in the information processing system 1 according to an embodiment.

An item of the job statistical information 35 contains different pieces of data and statistical information for every job active in the information processing system 1.

In the example illustrated in FIG. 8, an item of the job statistical information 35 contains the following entries: JOB_ID, JOB_NAME, USER, GROUP, OPEN, CLOSE, UNLINK, MKDIR, RMDIR, RENAME, GETATTR, SETATTR, and STATFS.

An item of the job statistical information 35 contains several tens of entries. FIG. 8 illustrates only representative entries, for simplification.

In this embodiment, JOB_ID indicates a job ID for uniquely identifying a job to be executed in the information processing system 1. A job ID is assigned to each job by the job management server 3.

JOB_NAME is assigned by a user who instructs a job and indicates the job name. The job name is based on the job ID in an item of job information 34 illustrated in FIG. 7.

USER indicates the name of the user instructing the job.

GROUP indicates the group to which the user who instructed the job belongs to.

OPEN indicates the number of file-opening operation by a job in the entire file system 41.

CLOSE indicates the number of file-closing operation by a job in the entire file system 41.

UNLINK indicates the number of file-deleting operation by a job in the entire file system 41.

MKDIR indicates the number of directory-creating operation by a job in the entire file system 41.

RMDIR indicates the number of directory-deleting operation by a job in the entire file system 41.

RENAME indicates the number of file- or directory-renaming operation by a job in the entire file system 41.

GETATTR indicates the number of attribution retrieving operation by a job in the entire file system 41.

SETATTR indicates the number of attribution establishing operation by a job in the entire file system 41.

STATFS indicates the number of confirming operations of the status of the file system 41 by a job in the entire file system 41.

The format of the job statistical information 35 illustrated in FIG. 8 is a mere illustrative example. The format of the job statistical information 35 may be appropriately modified depending on the configurations and/or implementations of the information processing system 1 and the control node 2.

### (B) System Operation

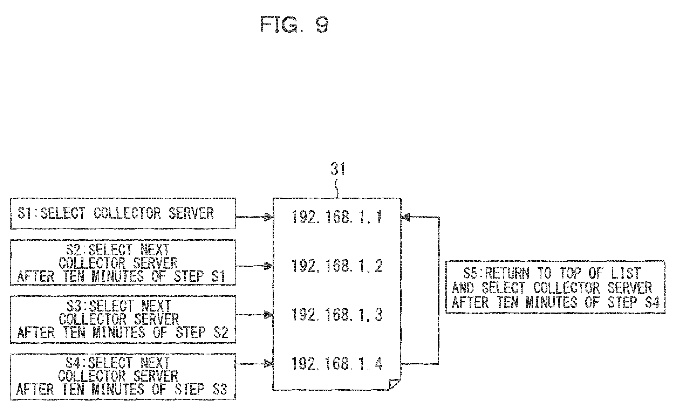

The operation of the information processing system 1 will now be described with reference to FIGS. 9 to 13.

FIG. 9 is a schematic view of the operation (Steps S1 to S5) of the collector-server selector 181 of the statistical-information acquirer 18 in the control node 2 according to an embodiment.

FIG. 9 illustrates an embodiment of the collector-server selector 181 that selects a collector server 4 from the server list 31 every rotation interval (t1), i.e., ten minutes.

In Step S1, the collector-server selector 181 selects a first server 4 corresponding to the IP address listed at the top of the server list 31, as a collector server 4.

In Step S2 after ten minutes of Step S1, the collector-server selector 181 selects a second server 4 corresponding to the IP address listed second from the top of the server list 31, as a collector server 4.

In Step S3 after ten minutes of Step S2, the collector-server selector 181 selects a third server 4 corresponding to the IP address listed third from the top of the server list 31, as a collector server 4.

In Step S4 after ten minutes of Step S3, the collector-server selector 181 selects a fourth server 4 corresponding to the IP address listed at the bottom (fourth from the top in this embodiment) of the server list 31, as a collector server 4.

In Step S5 after ten minutes of Step S4, the collector-server selector 181 returns to the top of the server list 31 and selects the first server 4 corresponding to the IP address at the top of the server list 31, as a collector server 4.

FIG. 9 illustrates a server list 31 containing four IP addresses. Alternatively, the number of IP addresses described in the server list 31 may be any number other than four.

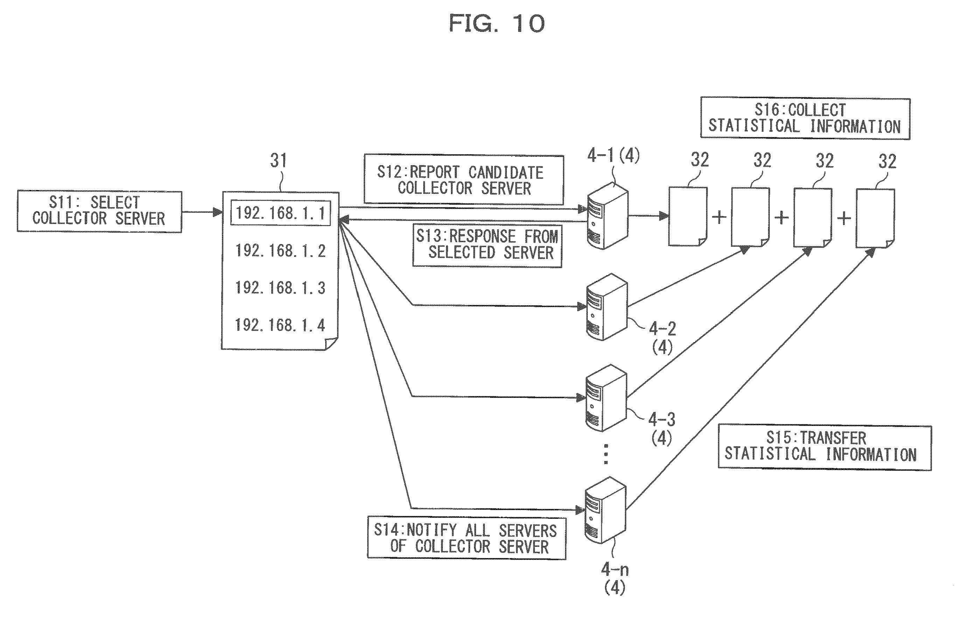

FIG. 10 is a schematic view of the operation (Steps S11 to S16) of the information processing system 1 according to an embodiment during collection of statistical information.

In Step S11, the collector-server selector 181 of the statistical-information acquirer 18 in the control node 2 selects a candidate collector server (server 4-1 in this embodiment) from the server list 31.

In Step S12, the collecting-server notifier 182 of the statistical-information acquirer 18 sends a notification of the candidate collector server to the server 4 selected by the collector-server selector 181 in Step S11.

In Step S13, the receiver 283 of the candidate collector server 4-1 receives the notification of the candidate collector server and sends a response to the control node 2.

In Step S14, the statistical-information requestor 183 of the statistical-information acquirer 18 sends a notification of the collector server to all of the servers 4 to report the IP address of the collector server 4-1 selected in Step S11.

In Step S15, the statistical-information transmitters 286 of the servers 4 other than the collector server 4-1 send the piecemeal statistical information items 32 that has been tallied by the corresponding statistical-information generators 281 and stored in the corresponding memories 22 to the collector server 4-1.

In Step S16, the statistical-information collector 285 of the collector server 4-1 tallies the piecemeal statistical information item 32 stored in its memory 22 and the piecemeal statistical information items 32 retrieved in Step S15 for each client 6 to generate a collected statistical information item 33 for each client 6.

As described above, the collected statistical information 33 generate by the collector server 4-1 corresponds to the IP address of each client (computing node) 6. The job-information acquirer 185 of the control node 2 tallies the statistical information items of all computing nodes 6 performing the same job with reference to the node list 30 and the job information 34 to generate the job statistical information 35.

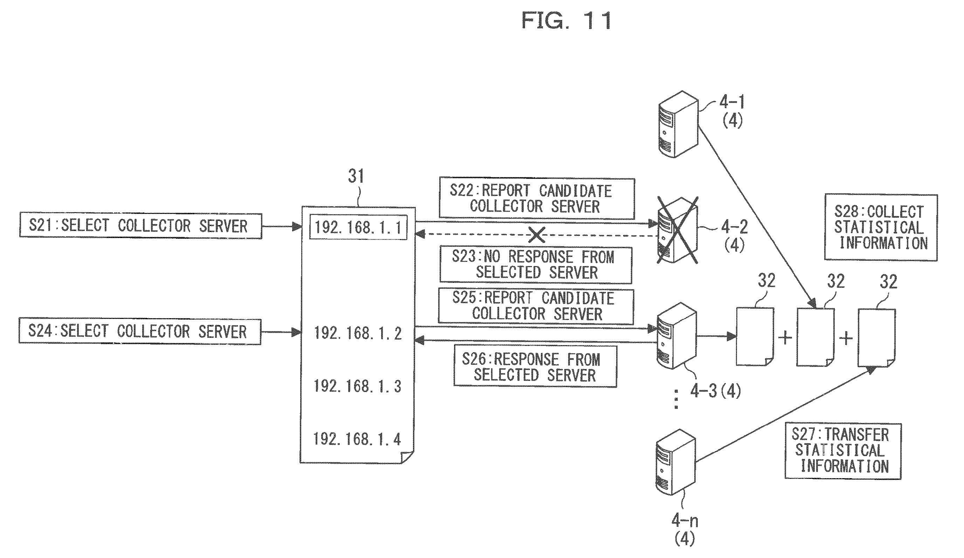

FIG. 11 is a schematic view of the operation (Steps S21 to S28) in a non-responsive mode of a candidate collector server 4 selected in the information processing system 1 according to an embodiment.

In Step S21, the collector-server selector 181 of the statistical-information acquirer 18 in the control node 2 selects a candidate collector server (server 4-2 in this embodiment) from the server list 31.

In Step S22, the collecting-server notifier 182 of the statistical-information acquirer 18 sends a notification of the candidate collector server to the server 4-2 that is the candidate collector server selected by the collector-server selector 181 in Step S21.

In Step S23, the collector-server selector 181 waits for a response from the candidate collector server 4-2 that has received the notification of the candidate collector server in Step S22, but the candidate collector server 4-2 is non-responsive.

For example, if the candidate collector server 4-2 does not respond within a predetermined time after the notification of the candidate collector server, the collector-server selector 181 selects a next candidate collector server (server 4-3 in this embodiment) from the server list 31 in Step S24.

In Step S25, the collecting-server notifier 182 sends a notification of the candidate collector server to the server 4-3 that is the candidate collector server selected by the collector-server selector 181 in Step S24.

In Step S26, the receiver 283 of the candidate collector server 4-3 receives a notification of the candidate collector server and sends a response to the control node 2.

The collecting-server notifier 182 of the control node 2 reports the IP address of the collector server 4-3 selected in Step S24 as a notification of the collector server to every server 4.

In Step S27, the statistical-information transmitters 286 of the servers 4 other than the servers 4-2 and 4-3 send the piecemeal statistical information items 32 tallied by the corresponding statistical-information generators 281 and stored in the corresponding memories 22 to the collector server 4-3. The server 4-2 cannot transfer the piecemeal statistical information 32 due to a defect, for example.

In Step S28, the statistical-information collector 285 of the collector server 4-3 tallies the piecemeal statistical information 32 stored in its memory 22 and the piecemeal statistical information items 32 collected in Step S27 for each client 6 to prepare the collected statistical information items 33 for each client 6 other than the statistical information of the server 4-2.

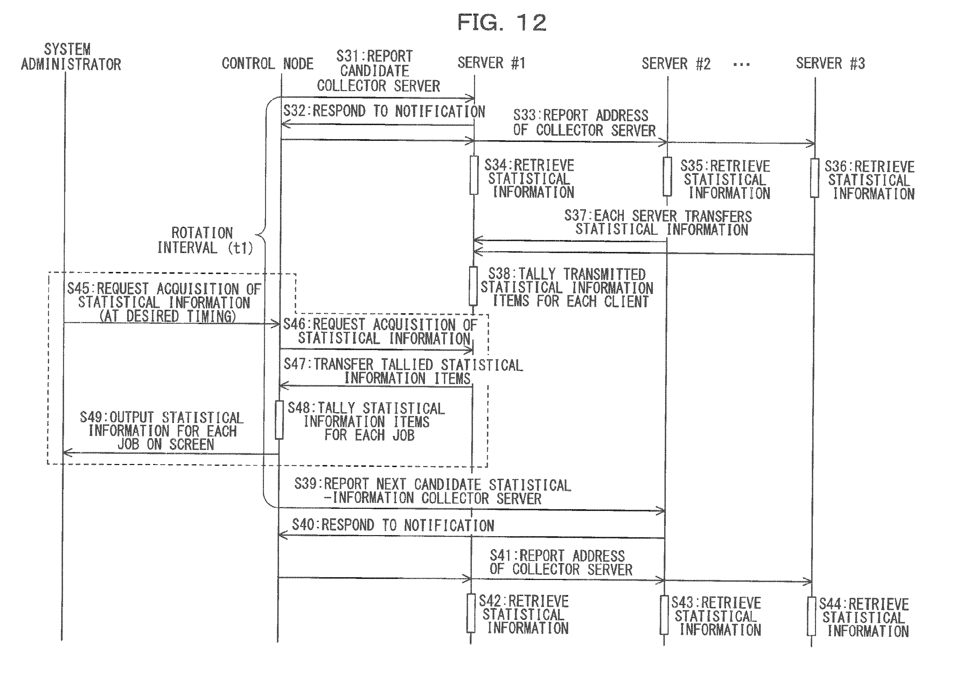

FIG. 12 is a schematic view of the operation (Steps S31 to S49) of the entire information processing system 1 according to an embodiment.

In Step S31, the collector-server selector 181 of the control node 2 selects one of the servers 4 (server 4-1 in this embodiment) in the server list 31 as a candidate collector server, and the collecting-server notifier 182 sends a notification of the candidate collector server to the server 4-1.

In Step S32, the receiver 283 of the server 4-1 receives the notification of the candidate collector server and sends a respond to the control node 2.

In Step S33, the collecting-server notifier 182 of the control node 2 sends the IP address of the collector server 4-1 to every server 4 as a notification of the collector server.

In Steps S34 to S36, the statistical-information generator 281 of each of the servers 4-1 to 4-n generates a piecemeal statistical information item 32 for every client 6 that accesses each of the corresponding servers 4-1 to 4-n. Steps S34 to S36 may be performed before, during, or after Steps S31 to S33. Steps S34 to S36 can be performed by servers 4-1 to 4-n in any order.

In Step S37, the statistical-information retriever 282 of the collector server 4-1 requests the other servers 4 to send the corresponding piecemeal statistical information items 32. The statistical-information transmitters 286 of the servers 4 other than the collector server 4-1 send the piecemeal statistical information items 32 to the receiver 283 of the collector server 4-1.

In Step S38, the statistical-information collector 285 of the collector server 4-1 tallies the piecemeal statistical information item 32 tallied by its statistical-information retriever 282 in Step S34 and the piecemeal statistical information items 32 collected in Step S27 for each client 6 to generate collected statistical information 33.

After a rotation interval (t1) from the end of Step S31, the collector-server selector 181 of the control node 2 selects the next server 4 in the server list 31 (server 4-2 in this embodiment) as a candidate collector server in Step S39. The collecting-server notifier 182 sends a notification of the candidate collector server to the server 4-2.

Step S40, the receiver 283 of the server 4-2 receives the notification of the candidate collector server and sends a response to the control node 2.

In Step S41, the collecting-server notifier 182 of the control node 2 sends the IP address of the collector server 4-2 as a notification of the collector server to every server 4.

In Steps S42 to S44, the statistical-information generator 281 of each of the servers 4-1 to 4-n generates the piecemeal statistical information item 32 for each client 6 that accesses each of the corresponding servers 4-1 to 4-n. Steps S42 to S44 may also be performed before, during, or after Steps S39 to S41. Steps S42 to S44 can be performed by servers 4-1 to 4-n in any order.

Steps S37 to S44 are repeated so that the collector servers 4 are selected in order, and the selected collector server 4 collects the piecemeal statistical information items 32.

In Step S45 at any timing, an instruction for the acquisition of statistical information is sent from the management terminal 5 to the control node 2 in response to an instruction for the acquisition of the statistical information from the system administrator via the management terminal 5.

Upon reception of the instruction, the statistical-information requestor 183 of the control node 2 requests the acquisition of the statistical information to the collector server 4 (server 4-1 in this embodiment) in Step S46.

In Step S47, the receiver 283 of the collector server 4-1 receives the request for the acquisition of the statistical information sent in Step S46, and the statistical-information transmitter 286 sends the statistical information 33 collected in Step S38 to the control node 2.

In Step S48, the statistical-information receiver 184 of the control node 2 receives the collected statistical information 33 from the collector server 4-1. The job-information acquirer 185 receives job information 34 from the job management server 3. The statistical-information transmitter 186 generates job statistical information 35 with reference to the node list 30 and the job information 34 and sends this to the management terminal 5.

In Step S49, the management terminal 5 displays the job statistical information 35 on a screen (not shown) to provide the job statistical information 35 to the system administrator.

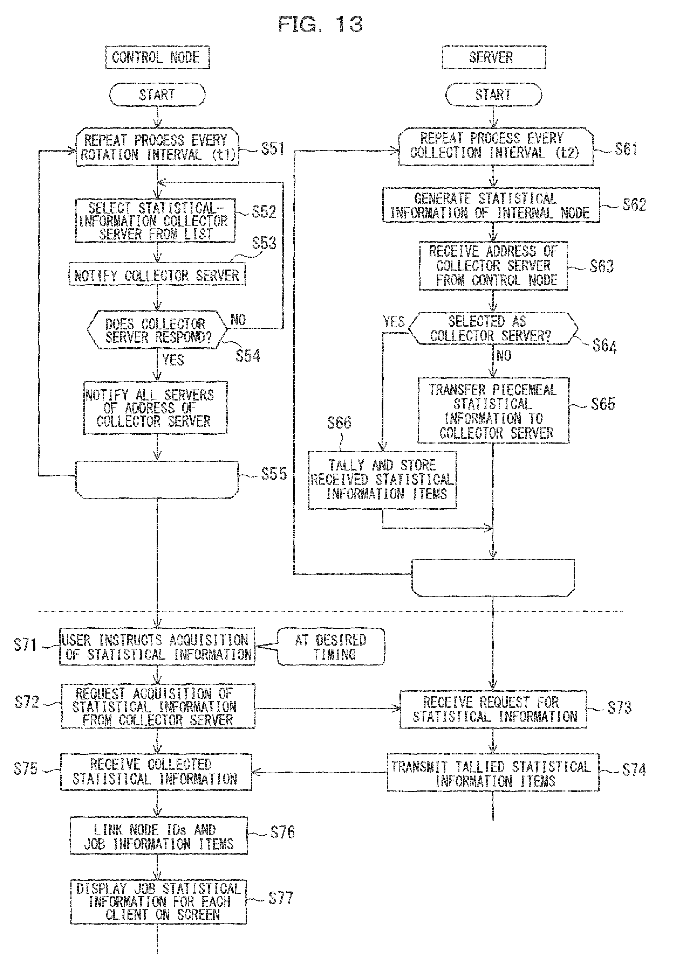

FIG. 13 is a flow chart illustrating the operation (Steps S51 to S55, S61 to S66, and S71 to S77) of the entire information processing system 1 according to an embodiment.

The process carried out by the control node 2 will now be described. Steps S51 to S55 are repeated by the control node 2.

In Step S52, the collector-server selector 181 of the control node 2 selects a candidate collector server from the servers 4 in the server list 31.

In Step S53, the collecting-server notifier 182 sends a notification of the candidate collector server to the server 4 selected in Step S52.

In Step S54, the collecting-server notifier 182 waits for a response from the candidate collector server 4 that received the notification of the candidate collector server in Step S52.

If the server 4 responds in Step S54 (YES from Step S54), the collecting-server notifier 182 of the control node 2 sends the IP address of the collector server to every server 4 as a notification of the collector server in Step S55.

If the server 4 is non-responsive in Step S54 (NO from Step S54), the collector-server selector 181 of the control node 2 selects the next server 4 in the server list 31 as a candidate collector server in Step S52, and then Steps S53 to S55 are repeated.

After the rotation interval (t1), the process returns to Step S51. In Step S52, the collector-server selector 181 of the control node 2 selects the next server 4 in the server list 31 as a collector server, and Steps S53 to S55 are repeated.

The process carried out by a server 4 will now be described. Steps S61 to S66 are repeated by a server 4 and are carried out independently of Steps S51 to S55.

In Step S62, the statistical-information generator 281 of each server 4 generates piecemeal statistical information 32 for each client 6 that accesses the server 4.

In Step S63, which is carried out before, during, or after Step S62, the receiver 283 of the server 4 selected as the collector server in Step S52 receives the notification of the candidate collector server and sends a response to the control node 2.

In Step S64, the collecting-server determiner 284 of the server 4 determines whether it is a collector server 4. For example, the collecting-server determiner 284 compares the IP address receives in Step S63 to the IP address of itself and determines that it is the collector server if the two IP addresses are identical.

If the server 4 is not the collector server (NO from Step S64), in Step S65, the statistical-information transmitter 286 sends the piecemeal statistical information 32 generated in step S62 to the collector server 4 reported in Step S63.

If the server 4 is the collector server (YES from Step S64), the receiver 283 receives the piecemeal statistical information items 32 from the other servers 4 in Step S66. The statistical-information collector 285 tallies its piecemeal statistical information 32 generated in Step S62 and the piecemeal statistical information items 32 received from the other servers 4 to generate collected statistical information 33.

Steps S61 to S66 are repeated so that the servers 4 collect the piecemeal statistical information items 32 at every collection interval (t2), and the collector server 4 generates the collected statistical information 33.

Steps S71 to S77 to be carried out at a desired timing will now be described. Steps S71 to S77 are carried out independently of Steps S51 to S55 and S61 to S66.

In Step S71 at any timing, an instruction for the acquisition of statistical information is sent from the management terminal 5 in response to an instruction for the acquisition of the statistical information from the system administrator via the management terminal 5.

Upon reception of the instruction, the statistical-information requestor 183 of the control node 2 requests the acquisition of the statistical information to the collector server 4 in Step S72.

In Step S73, the receiver 283 of the collector server 4 receives the request for the acquisition of statistical information sent in Step S72. In Step S74, the statistical-information transmitter 286 sends the statistical information 33 collected in Step S66 to the control node 2.

In Step S75, the statistical-information receiver 184 of the control node 2 receives the collected statistical information 33 from the collector server 4.

In Step S76, the job-information acquirer 185 receives job information 34 from the job management server 3. The statistical-information transmitter 186 refers to the node list 30 and the job information 34 to generate job statistical information 35.

In Step S77, the statistical-information transmitter 186 outputs the job statistical information 35 generated in Step S76 on a display (not shown) of the management terminal 5.

### (C) Advantageous Effects

As illustrated in FIG. 14, the conventional control node 202 requests each server 204 to acquire statistical information, collects the statistical information items, and tallies statistical information items for each client. Thus, the update of the statistical information is time consuming.

In contrast, in the information processing system 1 according to an embodiment, the collector-server selector 181 of the control node 2 selects a collector server from a plurality of servers 4, and the collecting-server notifier 182 sends a notification of the candidate collector server to report the corresponding server 4 of being selected as a control server. The statistical-information collector 285 of the collector server 4 that has received the notification preliminarily retrieves the piecemeal statistical information items 32 collected by each server 4 for every client. The collected statistical information items for every client is sent by the statistical-information transmitter 286 of the collector server 4 in response to the request for the acquisition of statistical information sent from the management terminal 5 to the control node 2. Finally, the job statistical information 35 is sent to the management terminal 5.

The collection of statistical information in this way can significantly save time compared to a conventional procedure involving independent correction of statistical information by each server 204 and transmission of the collected statistical information items to the control node 202 in response to direct instructions of the acquisition of statistical information sent from the control node 202 to every server 204.

The calculation of statistical information through a conventional procedure, for example, for 10,000 clients requires each server to process 10,000 statistical information files. In contrast, the information processing system 1 according an embodiment has a statistical-information generator 281 for each server 4 that preliminarily calculates the piecemeal statistical information 32 at each retrieval interval (t2). As a result, the processing time of the statistical information is significantly reduced.

The collector-server selector 181 of the control node 2 rotates the collector server 4 at every rotation interval (t1). This distributes the CPU load and memory load of the collector server 4 that generates the collected statistical information 33 among the other servers 4.

If the server 4 selected as a collector server is non-responsive, the collector-server selector 181 selects another nondefective server 4. This ensures the redundancy and robustness of the statistical information acquisition process.

Since the piecemeal statistical information items 32 of all the servers 4 are collected by the collector server 4, the CPU load and memory load on the control node 2 can be reduced compared to those in a conventional procedure of collecting statistical information items by a control node 202. The control node 2 is the principal node that manages the entire information processing system 1. Thus, a reduction in the loads on the memory 12 and the CPU 11 enhances the performance of the information processing system 1.

The quick collection of the collected statistical information 33 allows the system administrator to access the latest statistical information in real time compared to statistical information collected through a conventional procedure after an instruction of the acquisition of the statistical information.

### (D) Others

The techniques disclosed in the present invention should not be limited to the embodiments described above and may be modified in various ways within the scope of the embodiments.

For example, in the embodiments described above, the statistical-information retriever 282 of the collector server 4 requests other servers 4 to transfer the piecemeal statistical information items 32. Alternatively, the statistical-information transmitters 286 of the other servers 4 may periodically transfer the piecemeal statistical information items 32 regardless of a request from the statistical-information retriever 282.

In the embodiments described above, the collector-server selector 181 selects a collector server 4 every ten minutes. Alternatively, the rotation interval for the selection of a collector server 4 may be set to any time by the system administrator depending on the operating status of the information processing system 1.

In the embodiments described above, the statistical information contains the number of activities involved with the file system 41 performed by each client 6. Alternatively, the statistical information may contain the assignment of activities and operating time of the clients 6 involved with the file system 41. Alternatively, the statistical information may contain the CPU usage, the memory usage, the disk usage, and/or the network band of the nodes.

In the embodiments described above, the collector-server selector 181 selects a collector server 4 in order from the server list 31. Alternatively, the collector-server selector 181 may select a collector server 4 after weighting the servers 4 depending on the CPUs, memories, and network loads of the servers 4.

In the embodiments described above, the collecting-server notifier 182 sends a notification of a candidate collector server to the candidate collector server 4 and sends the address of the collector server 4 to every server 4 as a notification of the collector server after a response from the candidate collector server 4. Alternatively, the collecting-server notifier 182 may send a single notification of both the candidate collector server and the collector server. For example, the collecting-server notifier 182 may send only a notification of a collector server.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

The disclosure extends to the following statements:
S1. A control program for a controller (2) controlling a plurality of information processing apparatuses (4), the program causing the controller (2) to
   select one of the information processing apparatuses (4) as a collecting unit,
   collect historical information (32) items from the information processing apparatuses (4), and
   instruct the collecting unit to generate collected information (33) containing the historical information (32) items from the information processing apparatuses (4).
S2. The control program for a controller (2) according to statement S1, wherein the collected information (33) generated by the collecting unit is transmitted upon reception of a transmission request of the collected information (33).
S3. The control program for a controller (2) according to statement S1 or S2, wherein
   each of the information processing apparatuses (4) is accessed by a plurality of clients (6), and
   each of the information processing apparatuses (4) generates a historical information (32) item containing the access status of the information processing apparatus (4) accessed by the clients (6).
S4. The control program for a controller (2) according to any one of statements S1 to S3, wherein one of the information processing apparatuses (4) is selected, in order, as a collecting unit at every first time interval (t1).
S5. The control program for a controller (2) according to any one of statements S1 to S4, wherein the collecting unit collects the historical information (32) items from the information processing apparatuses (4) at every second time interval (t2) .
S6. The control program for a controller (2) according to statement S5, wherein the selection of the collecting unit is out of synchronization with the collection of the historical information (32) items.

## Claims

1. An information processing system (1) comprising:
a plurality of information processing apparatuses (4); and
a controller (2) that controls the information processing apparatuses (4),
the controller (2) comprising:
a selector (181) that selects one of the information processing apparatuses (4), as a collecting unit,
each of the information processing apparatus (4) comprising:
a retriever (282) that retrieves historical information (32) items from the other information processing apparatuses (4), the retriever (282) being operable after the information processing apparatus (4) is assigned as the collecting unit; and
a collector (285) that collects the historical information (32) items to generate collected information (33).

2. The information processing system (1) according to Claim 1, wherein the controller (2) further comprises:
a transmitter (186) that transmits the collected information (33) generated by the collecting unit upon reception of a transmission request of the collected information (33).

3. The information processing system (1) according to Claim 1 or 2, wherein
each of the information processing apparatuses (4) is accessed by a plurality of clients (6), and
each information processing apparatus (4) further comprises:
an information generator that generates a historical information (32) item containing the access status of the information processing apparatus (4) accessed by the clients (6).

4. The information processing system (1) according to any one of Claims 1 to 3, wherein the selector (181) selects, in order, one of the information processing apparatuses (4) as the collecting unit at every first time interval (t1).

5. The information processing system (1) according to any one of Claims 1 to 4, wherein the retriever (282) retrieves the historical information (32) items from the information processing apparatuses (4) at every second time interval (t2),
optionally wherein the selection of the collecting unit by the selector (181) is out of synchronization with the collection of the historical information (32) items by the retriever (282).

6. A method of controlling an information processing system (1), the information processing system (1) comprising a plurality of information processing apparatuses (4) and a controller (2) that controls the information processing apparatuses (4), the method comprising:
selecting one of the information processing apparatuses (4) as a collecting unit at the controller (2);
collecting historical information (32) items from the information processing apparatuses (4) at the controller (2); and
generating collected information (33) at the collecting unit in response to an instruction from the controller (2), the collected information (33) containing a collection of the historical information (32) items from the information processing apparatus (4).

7. The method of controlling an information processing system (1) according to Claim 6, wherein the collected information (33) generated at the collecting unit is transmitted upon reception of a transmission request of the collected information (33).

8. The method of controlling an information processing system (1) according to Claim 6 or 7, wherein
each of the information processing apparatuses (4) is accessed by a plurality of clients (6), and
each of the information processing apparatuses (4) generates a historical information (32) item containing the access status of the information processing apparatus (4) accessed by the clients (6).

9. The method of controlling an information processing system (1) according to any one of Claims 6 to 8, wherein one of the information processing apparatuses (4) is selected, in order, as a collecting unit at every first time interval (t1).

10. The method of controlling an information processing system (1) according to any one of Claims 6 to 9, wherein the collecting unit collects the historical information (32) items from the information processing apparatuses (4) at every second time interval (t2),
optionally wherein the selection of the collecting unit is out of synchronization with the collection of the historical information (32) items.

11. A control program for a controller (2) controlling a plurality of information processing apparatuses (4), the program causing the controller (2) to
select one of the information processing apparatuses (4) as a collecting unit,
collect historical information (32) items from the information processing apparatuses (4), and
instruct the collecting unit to generate collected information (33) containing the historical information (32) items from the information processing apparatuses (4).

12. The control program for a controller (2) according to Claim 11, :
a) wherein the collected information (33) generated by the collecting unit is transmitted upon reception of a transmission request of the collected information (33) ; and/or
b) wherein:
each of the information processing apparatuses (4) is accessed by a plurality of clients (6), and
each of the information processing apparatuses (4) generates a historical information (32) item containing the access status of the information processing apparatus (4) accessed by the clients (6); and/or
c) wherein one of the information processing apparatuses (4) is selected, in order, as a collecting unit at every first time interval (t1).

13. The control program for a controller (2) according to any one of Claims 11 to 12, wherein the collecting unit collects the historical information (32) items from the information processing apparatuses (4) at every second time interval (t2),
optionally wherein the selection of the collecting unit is out of synchronization with the collection of the historical information (32) items.

14. A first information processing apparatus (4) comprising:
a retriever (282) that retrieves historical information (32) items from a plurality of other information processing apparatuses (4) the retriever (282) being operable after the first information processing apparatus (4) is selected as a collecting unit by a controller (2) ; and
a collector (285) that collects the historical information (32) items to generate collected information (33).

15. A controller (2) comprising:
a selector (181) that selects a first information processing apparatus (4) among a plurality of information processing apparatuses (4) as a collecting unit; and
a notifier that notifies the first collecting unit of the selection of the collecting unit.
